# EUROPEAN PATENT SPECIFICATION

(11) **EP 3 060 809 B1**
(45) Date of publication and mention of the grant of the patent: **13.06.2018**
(21) Application number: 14790317.3
(22) Date of filing: 04.09.2014
(51) Int. Cl.: F16K 11/076, F16K 11/085, F16K 27/06, F04D 29/62, F04D 15/00, F01P 7/14

(54) **EXTRACTABLE VALVE GROUP WITH IMPROVED OBTURATOR AND PUMP**
AUSZIEHBARE VENTILGRUPPE MIT VERBESSERTEM SCHIEBER UND PUMPE
GROUPE DE VANNE EXTRACTIBLE AVEC OBTURATEUR AMÉLIORÉ ET POMPE

(30) Priority: 22.10.2013 IT BS20130149
(43) Date of publication of application: 31.08.2016
(73) Proprietor: Industrie Saleri Italo S.P.A., 25065 Lumezzane, Brescia (IT)
(72) Inventor: TEBALDINI, Giovanni, I-25065 Lumezzane (Brescia) (IT)
(74) Representative: Gamba, Alessandro
(86) International application number: PCT/IB2014/064252
(87) International publication number: WO 2015/059586

(56) References cited:
- EP-A2- 1 225 319
- WO-A1-2011/095907
- WO-A1-2013/120514
- BE-A- 678 348
- DE-A1- 10 249 449

## Description

It is an object of the present invention a valve group for a pump of a cooling circuit, in particular for vehicles, for example cars or motorcycles.

It is known that the cooling pump and the components making the same are the most important elements in a cooling circuit for heat engines, especially in the field of vehicles. Therefore, great attention is directed towards the correct design of such components and continuous improvement of performance thereof.

Examples of cooling pumps are illustrated in the documents EP-A1-1503083, PCT/IT2009/000269 and PCT/IB2011/050256 by the Applicant, as well as in document WO2013/120514 A1. Examples of valve groups with obturators are provided in documents US3170669 A and WO2006/055977 A1.

In particular, as regards the documents PCT/IT2009/000269 and PCT/IB2011/050256, the obturator positioned downstream of the rotor plays an essential role; furthermore, as regards the document PCT/IB2011/050256 also the fact that the valve group is suitable for being extracted as a cartridge from the pump is particularly important.

The main problem of said type of valve groups is that of obstructing in an effective manner the passage of cooling liquid so that this does not leak and therefore there is no unwanted passage of cooling liquid. However, it is necessary for this obstruction to be performed in a way that is simple and reproducible over time. That is to say that the valve groups must be effective in the obstruction operations, without compromising, however, their lifespan and without affecting the movement means which move the specific components of the valve group suitable for performing said obstruction.

As compared to the solutions of the prior art, the development of said components is directed to the search for a valve group which addresses said technical problem, being characterised by a marked effectiveness in operations of partial or total obstruction, passage of cooling liquid therein, so that this improvement, in any case, does not affect the lifespan and the adjustment of the components of the valve group intended for said operations.

It is therefore an object of the present invention is to provide a valve group comprising an obturator suitable for addressing said problem of the valve groups of the prior art.

Such object is achieved by a valve group made according to claim 1. Such object is further achieved by a pump, according to claim 12, comprising said valve group.

The features and advantages of the valve group according to the present invention will appear more clearly from the following description, made by way of an indicative and non-limiting example with reference to the annexed figures, wherein:
- figures 1a and 1b show an example of a cooling pump comprising the valve group which is not part of the claimed subject-matter, in accordance with a first example, in an open configuration and a closed configuration, respectively;
- figures 2a and 2b show an example of a cooling pump comprising the valve group which is not part of the claimed subject-matter, in accordance with a second example, in an open configuration and a closed configuration, respectively;
- figures 3a and 3b show an example of a cooling pump comprising the valve group according to the present invention, in accordance with an embodiment, in an open configuration and a closed configuration, respectively;
- figures 4a and 4b show an example of a cooling pump comprising the valve group according to the present invention, in accordance with a further embodiment, in an open configuration and a closed configuration, respectively;

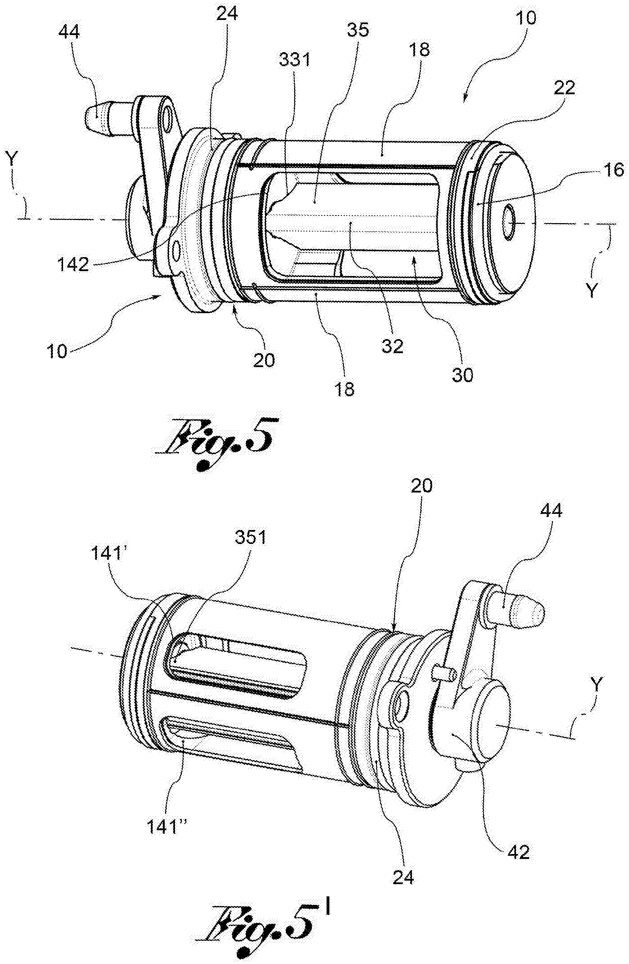

- figures 5 and 5' show two axonometric views of the valve group according to the present invention, in one embodiment, in a front and rear view, respectively;
- figures 6 and 6' show two axonometric views of a detail of the valve group, in particular of the obturator, according to one embodiment;

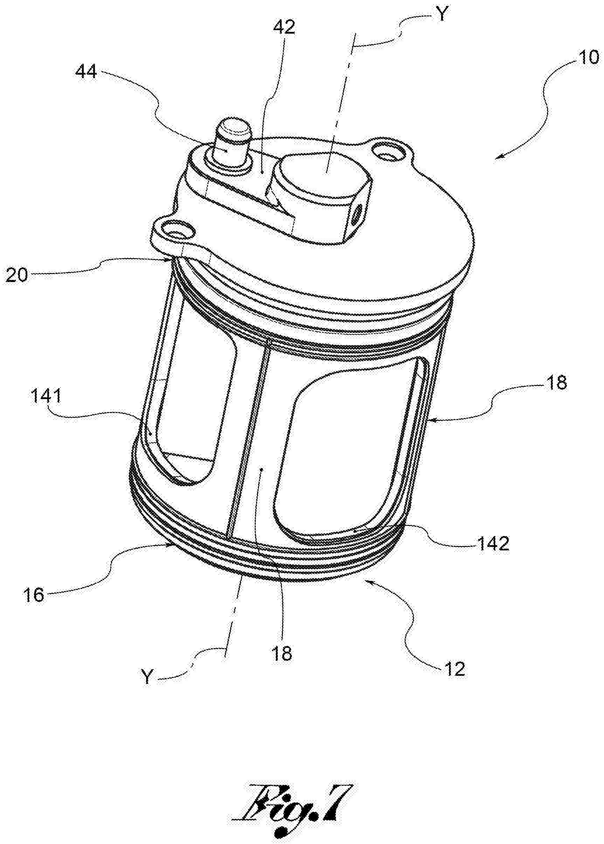

- figure 7 shows a perspective view of the valve group according to the present invention, in accordance with a further embodiment;

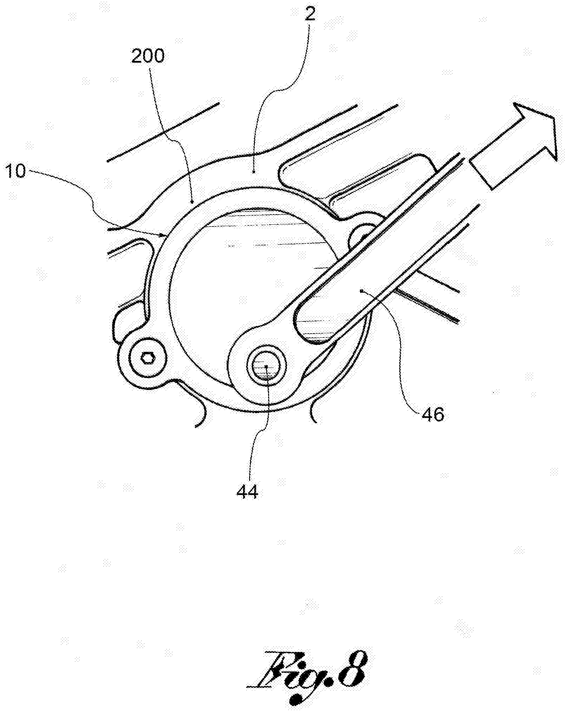

- figure 8 shows a detail of the pump containing the valve group according to the present invention.

According to one embodiment of the present invention, the reference numeral 1 indicates a pump of a cooling circuit, in particular for vehicles, comprising a pump body 2 and a rotor 4 housed in the pump body 2, for example having a substantially circular shape. Preferably, the pump 1 is actuated mechanically.

The pump body 2 is connectable to the cooling circuit of the engine, and in particular is connectable to a section of the suction circuit, upstream, by which liquid is drawn, and to a section of the supply circuit, downstream, to which liquid is supplied under pressure towards the engine.

The rotor 4, placed in rotation around a rotor rotation axis, is suitable for drawing the liquid from the suction section and sending it under pressure to the supply section.

Downstream of the rotor, the pump body 2 has a supply chamber 6, preferably with a volute pattern, and at least a supply duct 8, which extends from the supply chamber 6. The supply chamber 6 and the at least one supply duct 8 are free from other openings towards further ducts, but the opening of the supply duct towards the section downstream of the cooling circuit.

In a preferred embodiment, the pump body 2 comprises two supply ducts 8, a primary supply duct 8' and a secondary supply duct 8", respectively suitable for allowing the flow of cooling liquid in two separate circuits, for example a first cooling circuit specific for cooling the engine, and a second cooling circuit specific for cooling further components comprised in the vehicle.

In a preferred embodiment, the pump 1 comprises a valve group 10, to limit on command the passage of liquid in the supply chamber 6 to the at least one supply duct 8.

In particular, the valve group 10 is suitable for being configured in an open configuration, in which it allows the passage of liquid, and in a closed configuration, in which it obstructs the passage from the supply chamber 6 to the supply duct 8, limiting or preferably eliminating or preventing the passage of liquid from the supply chamber 6 to the supply duct 8.

In some embodiments, therefore, when the valve group 10 is in the closed configuration, the supply chamber 6 is closed and the liquid remains therein, for example kept stirred by the rotating rotor 4.

Preferably in an open configuration, the valve group 10 allows the passage of the greatest amount possible of cooling liquid.

In further preferred embodiments, the valve group 10 is suitable for acting in "mixed" configurations; for example, in an open configuration the valve group 10 is suitable for allowing the passage of cooling liquid in the secondary supply duct 8', while it obstructs at least in part the passage of cooling liquid in the primary supply duct 8", or vice versa.

According to the present invention, the pump body 2 has a housing compartment 200 and the valve group 10 is insertable in said housing compartment 200 and extracted therefrom.

The valve group 10 extends along a rotation axis Y-Y. Furthermore, transversally to said rotation axis Y-Y, the valve group 10 identifies a through duct 14 for the cooling liquid. In other words, the cooling liquid moved by the rotor 4 in the supply chamber 6 towards the at least one supply duct 8 is forced by the presence of the valve group 10 to flow inside a passage in fact delimited by the presence of the valve group 10 itself; that is the duct 14.

Preferably, the duct 14 therefore is suitable for identifying an exit mouth 141, through which the cooling liquid exits the duct 14 to enter the supply duct 8. In the embodiment comprising a primary supply duct 8' and a secondary supply duct 8" therefore are respectively identifiable a primary exit mouth 141' and a secondary exit mouth 141".

In other words, according to the present invention, the duct 14 is the passage inside which the cooling liquid is suitable for flowing through the valve group 10 inserted in the housing compartment 200; the exit mouth 141 therefore is the last section of the duct 14 wherein the liquid is inside the valve group 10 before entering the supply duct 8.

The valve group 10 has a cartridge structure, specific for favouring the operations of insertion and/or extraction of the valve group 10 in the pump body 2.

The valve group 10 comprises an obturator 30 rotatable around said rotation axis Y-Y.

Preferably, said obturator 30 is substantially housed in the duct 1 so that it is suitable for performing the obstruction operations of the same.

Preferably, the obturator 30 extends along said rotation axis Y-Y.

According to the present invention, the obturator 30, placed in rotation, is suitable for being positioned in an open position where it is suitable for allowing the passage of liquid through the duct 14, and at least one closed position wherein the obturator 30 is suitable for obstructing and/or choking the passage of cooling liquid through the duct 14. According to some embodiments, the obturator 30, in an open position, is further suitable for favouring and/or directing the flow of cooling liquid towards the exit mouth 141.

According to the present invention, the obturator 30 comprises an active portion 31, suitable for obstructing and/or choking the passage of cooling liquid through the duct 14.

According to the present invention, said active portion 31 rotates in an offset manner in relation to said rotation axis Y-Y. In other words, between the active portion 31 and the rotation axis Y-Y there is a predetermined distance. In fact, preferably the active portion 31, when the obturator 30 is housed inside the duct 14, is positioned distally from the entrance of the cooling liquid.

Preferably, the active portion 31 is suitable for being placed frontally to the exit mouth 141 of the duct so as to obstruct and/or choke the passage of cooling liquid from the duct 14 to the supply duct 8.

According to a preferred embodiment, in fact, distally from the entrance of the cooling liquid (for example identified by an entrance mouth 142 of the duct 14) in the valve group 10, the active portion 31 comprises, or is suitable for accommodating, a gasket 310 specifically suitable for operating with the exit mouth 141 performing the obstruction of the passage of cooling liquid.

Preferably, the active portion 31 has a shape substantially complementary to the exit mouth 141 so as to perform in an effective manner the obstruction thereof. In other embodiments, the gasket 310 has a shape complementary to the exit mouth 141.

In some preferred embodiments, the active portion 31 is suitable for fully obstructing the passage of cooling liquid, obstructing the at least one exit mouth 141; in other embodiments the active portion 31 is suitable for partially obstructing the passage of cooling liquid by choking its flow rate, only partially obstructing the at least one exit mouth 141; in embodiments comprising the primary exit mouth 141' and the secondary exit mouth 141", the active portion 31, with the obturator 30, in an open position, is suitable for leaving the passage of cooling liquid free from the primary exit mouth 141' and partially obstructing the secondary exit mouth 141".

According to the present invention, the active portion 31 extends for a section of arc along an imaginary circumference Cir; said imaginary circumference Cir has an imaginary centre C offset from the rotation axis Y-Y. That is to say that said imaginary centre C is not foundable on said rotation axis Y-Y.

According to the invention, the active portion 31 has an asymmetrical pattern in relation to said rotation axis Y-Y.

In other words, the active portion 31, taking a cross-section with a plane perpendicular to the rotation axis Y-Y, the active portion 31 has a first ridge 311 and a second ridge 312, where said first ridge 311 is farther from the rotation axis Y-Y than the second ridge 312.

According to a preferred embodiment, the obturator 30 further comprises a tip end 32, preferably opposite the active portion 31, that is to say positioned proximally from the entrance of the cooling liquid into the valve group 10. The tip end 32 is therefore suitable for being the first portion of the obturator 30 to encounter the cooling liquid in the valve group 10, being positioned proximally to the entrance of the cooling liquid.

According to the various embodiments of the valve group 10 and of the duct 14, said tip end 32 will have a more or less arched shape, or more or less rounded shape, so as to favour the flow of cooling liquid.

According to a preferred embodiment, both the active portion 31 and the tip end 32 extend in length continuously along the extension axis, the rotation axis Y-Y, of the obturator 30, for example along the entire length of the cross-section of the duct 14.

Furthermore, preferably the obturator 30 also comprises a sliding wall 35 which extends between said active portion 31 and said tip end 32. In other words, the sliding wall 35 joins the active portion 31 and the tip end 32.

According to a preferred embodiment, the sliding wall 35 comprises at least one concave portion 351, suitable for favouring the flow of cooling liquid towards the exit of the duct 14. In other words, on at least one section of the sliding wall 35, between the active portion 31 and the sliding wall 35 there is a concave portion 351, that is a concavity. In some embodiments said concave portion 351 extends continuously along the entire sliding wall 35 from the tip end 32 to the active portion 31.

According to a preferred embodiment said concave portion 351 has such a patter whereby, with the obturator 30 being placed in a closed position, the action of the cooling liquid on said sliding wall 35 and in particular on said concave portion 351 is suitable for creating an action on the obturator 30 to take it into the open position.

Furthermore, in some embodiments, with the obturator 30 being placed in an open position, the sliding wall 35 and in particular the concave portion 351 is suitable for directing the cooling liquid towards the exit of the valve group 10.

Preferably, as a function of the position of the exit mouth(s) 141, the obturator 30 is likely to have shapes different from one another on a case-to-case basis, maintaining the features described above.

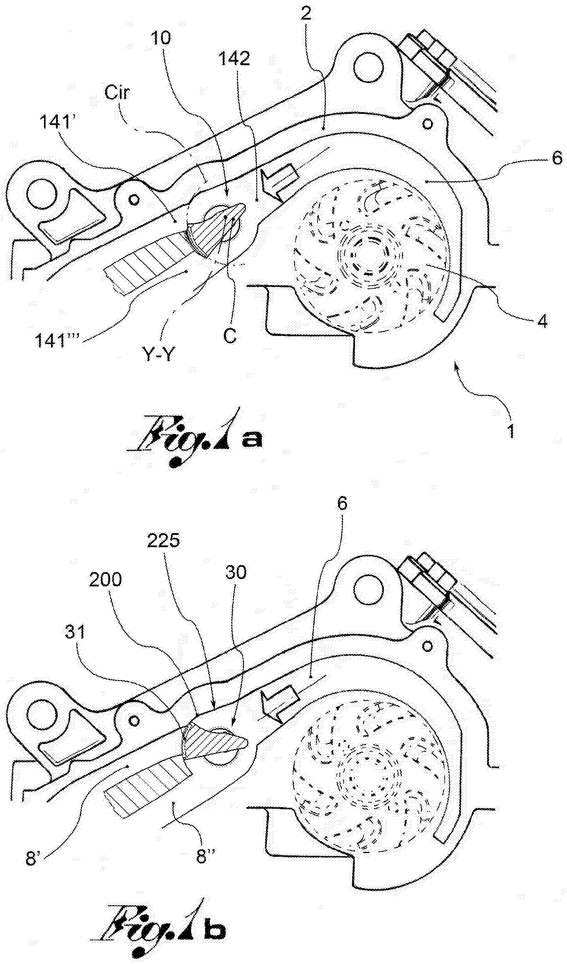

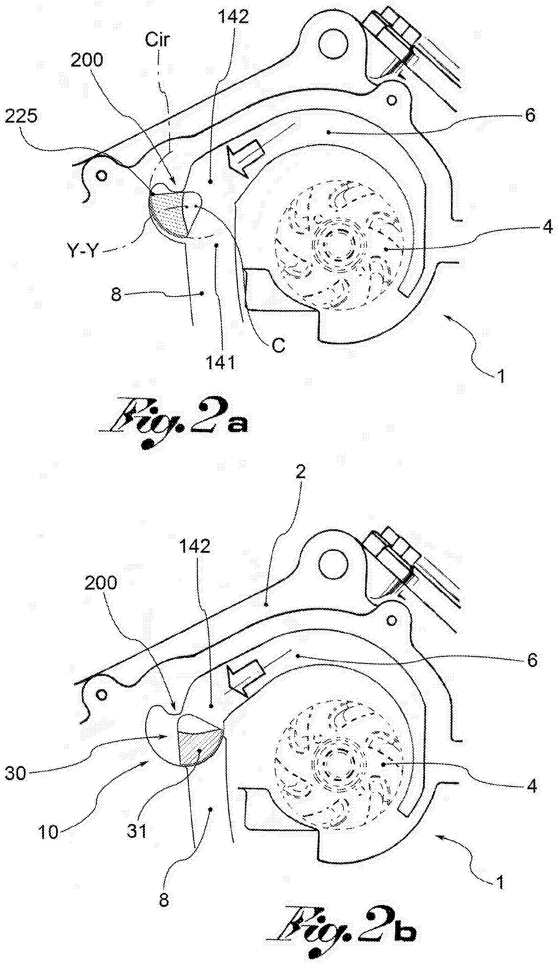

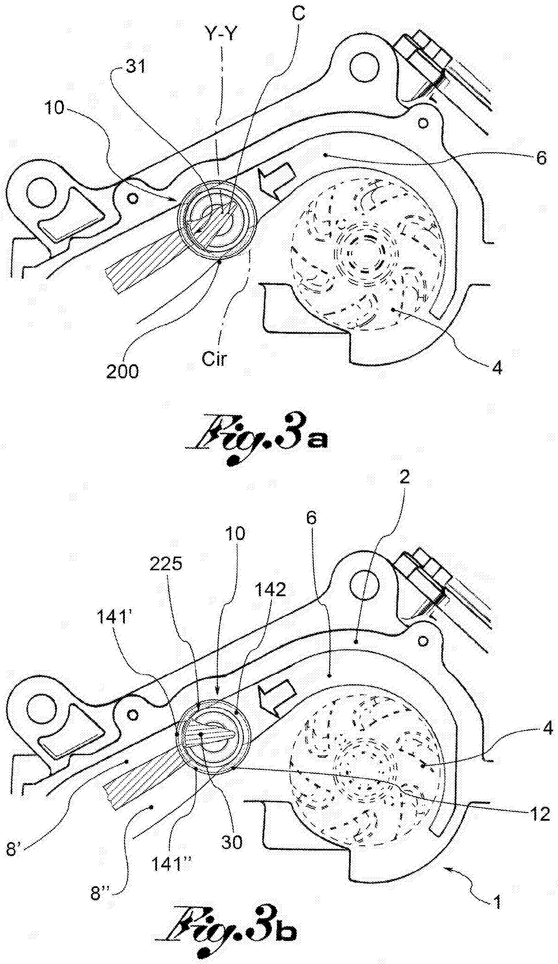

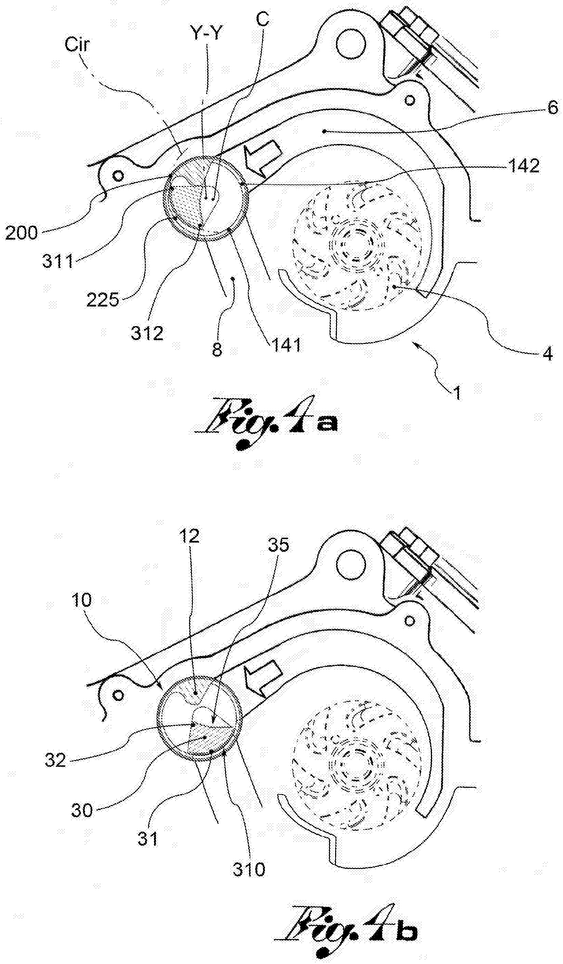

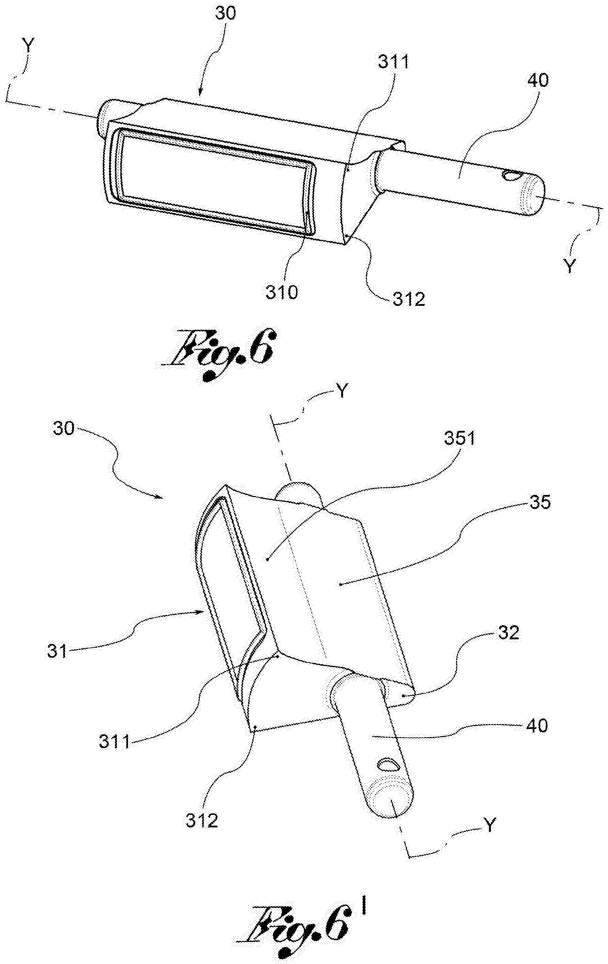

According to a preferred embodiment, the obturator 30 has in its cross section, that is along a section perpendicular to the rotation axis Y-Y, a substantially triangular shape, except, for example, for chamfered angles or tips and except for, when provided, the concave portion 351 of the sliding wall 351. In some embodiments, the obturator 30 has a substantially wedge-shaped cross-section, in other words elongated, having the active portion 31 as much more spaced apart as possible from the tip end 32 (as shown for example in figures 1a, 1b, 3a, 3b, 6, 6'). In some embodiments, the obturator 30 has a substantially triangular-shaped stocky cross-section, having the active portion 31 very close to the tip end 32 (as shown for example in figures 2a, 2b, 4a, 4b).

Preferably, in some embodiments, the housing 200 comprises a specific housing cavity 225, specific for housing the active portion 31, with the obturator 30 placed in an open position. In particular, the housing cavity 225 is shaped based on the shape of the active portion 31.

In further preferred embodiments, said housing cavity 225 is shaped so that is houses at least in part the active portion 31, even with the obturator 30 in a closed position.

Preferably, in the embodiment comprising the active portion 31 asymmetrical relative to the rotation axis Y-Y, with the obturator 30 placed in an open position, the first ridge 311 contacts the cavity 225, in particular the wall delimiting the cavity 225, while the second ridge 312 is spaced apart therefrom. In other words, the contact between the cavity 225 and the active portion 31 is substantially delimited at the portion proximal to said first ridge 311.

Preferably, in some embodiments, the exit mouth 141 is shaped so that the active portion 31 interacts therewith with its ridges 311 and 312, performing the obstruction, when the obturator is placed in a closed position.

According to the present invention, the valve group 10 comprises a valve body 12 consisting of a member elongated along a rotation axis Y-Y, preferably cylindrical in shape. Said valve body 12 is suitable for containing and protecting the obturator 30. The through duct 14 passes through said valve body 12.

The duct 14 is delimited by a plate 16 at the bottom, by side walls 18, projecting axially from the plate 16, and by a tubular head 20, which surmounts and joins the side walls 18 on the side opposite the plate 16.

According to a preferred embodiment, said side walls 18 are entirely shaped so that they favour the flow of the cooling liquid therein, for example by the Venturi effect. Preferably, said side walls 18 are shaped so that they favour the flow of cooling liquid therein also in relation to the shape of the obturator 30.

Preferably, in said embodiments, the entrance and exit of the duct 14 are not fictitious sections, as in the embodiments that do not provide the valve body 12, but are foundable on said valve body 12 itself. In other words, on the valve body 12 there are the entrance mouth 142 and the at least one exit mouth 141.

According to a preferred embodiment, as a function of the number of supply ducts 8, internally to the valve body 12 there is a corresponding through duct 14. In other words, in the embodiment comprising the double supply duct 8, with the primary supply duct 80 and the secondary supply duct 8", in the valve body 12 there are a primary exit mouth 141' and a secondary exit mouth 141".

According to said embodiments, therefore the obturator 30 is suitable for being substantially housed inside said valve body 12 so that the active portion 31 is suitable for engaging the exit mouth 141 comprised in said valve body 12 in the closed position.

Preferably, in such embodiments wherein the obturator 30 is surrounded by the valve body 12, the housing cavity 225 described above is placed on the valve body 12 preferably on one of the side walls 18.

In one embodiment the valve body 12 is made in a single piece; in further embodiments the valve body 12 is made in two or more parts engageable to one another.

Preferably, the valve body 12 is provided with outer seals, for example in the form of strings 22 housed in grooves provided on the outer surface of the side walls 18, and/or in the form of an O-ring 24 housed in a groove provided externally to the head 20 or the plate 16.

Or again in further embodiments the valve body 12 comprises, projecting therefrom outwardly dedicated sealing members, for example surrounding the entrance 142 and exit 141 mouth of the duct 14, suitable for interacting in a direct manner with the walls that delimit the housing 200 thus ensuring the seal between said valve body 12 and the pump body 2, thus preventing further leaking phenomena.

Furthermore, the pump 1 comprises actuation means suitable for acting on the valve group 10 and in particular on the obturator 30, so as to take it from the closed position to the open position and vice versa.

According to a preferred embodiment, the valve group 10 comprises movement means suitable for allowing said interaction between the obturator 30 and the actuation means. Said movement means comprise a shaft 40 having the prevailing extension direction along the rotation axis Y-Y, connected to the obturator 30.

In some embodiments, there is provided that the shaft 40 axially crosses the obturator 40 and engages the plate 16 and the head 20, for rotatably supporting the obturator 30. The shaft 40 further axially projects outwardly from the head 20 of the valve body 12.

Preferably, furthermore, the movement means comprise a disc 42, connected to the shaft 40, in particular at the portion thereof projecting from the head 20, and a pin 44, connected to the disc 42 in an eccentric position relative to the rotation axis Y-Y.

Preferably, the actuation means comprise a rod 46 translatable on command, connected to the pin 44 in a swivelling manner.

According to a variation of embodiment, the rod is connected to an actuator, for example a vacuum actuator, an electromagnetic actuator, a hydraulic or pneumatic actuator, an electrical actuator and the like.

The translation of the rod 46 therefore determines the rotation of the obturator 30.

According to a preferred embodiment, furthermore, the valve group comprises a sealing lip member, inserted onto the shaft 40.

Furthermore, the pump 1 comprises detection means suitable for detecting an operating condition of the vehicle, for example thermal detection means suitable for detecting the temperature of cooling liquid or the temperature of engine parts. Said actuation means are operatively connected to the detection means, to adjust the opening of the obturator.

Preferably, the thermal detection means detect the temperature of engine parts and transmit such information to the actuation means which, until the engine is cold, keep the obturator in the closed position. Gradually, upon increase of the engine temperature, that is according to a default function, the actuation means take the obturator to the open configuration.

In other words, the valve group object of the present invention has an obturator component suitable for obstructing and/or choking the duct engaging the valve body.

Innovatively, the valve group object of the present invention and the cooling pump containing it are particularly suitable for being used within a cooling system of a vehicle.

Advantageously, the valve group obstructs the passage of cooling liquid in an effective manner; in particular the valve group ensures a high seal minimising, until elimination, the phenomena of leaking and unwanted passage of cooling liquid therein. This is all advantageously obtained by an obturator suitable for being moved in an effective and simple manner, therefore improving the lifespan of both the obturator and the means moving the same.

Further advantageously, the moving cooling liquid, moved by the rotor, helps sealingly engaging the obturator in the closed position so that the active portion best obstructs the passage of cooling liquid.

A further advantageous aspect is also connected to the fact that the obturator is shaped so as to favour the movement between the closed and the open positions.

Advantageously, in conditions of faulty operation of the movement means acting on the obturator the latter is suitable for autonomously placing itself in the open position.

According to a further advantageous aspect, the obturator is shaped, in some embodiments, so that when in the supply chamber the pressure is above a threshold value the action of the cooling liquid on said obturator causes it to be automatically moved from the closed position to the open one.

According to a further advantageous aspect, the valve group, and in particular the duct, and the obturator group have such a geometry and cross section that the flow of cooling liquid is favoured, for example taking advantage of the Venturi effect.

Advantageously the active, portion of the obturator, placed in a closed position, is in some embodiments suitable for being placed in a housing cavity, wherein said active portion engages said cavity only by the ridge, so that the frictional forces to be overcome to take the obturator to the open position are minimal.

According to a further advantageous aspect therefore friction and wear of the valve group are minimised to the utmost, thus providing significant benefits to the lifespan of the same.

Advantageously, valve groups having the same valve body, but different obturators, may be inserted in an interchangeable manner in the pump group depending on the needs that may also occur during the lifespan of the car or motorcycle. A further advantageous aspect of such embodiments therefore is that of completely separating the design of pump and in particular of the housing cavity from the specific needs of the obturator.

It is clear that a man skilled in the art can make changes to the valve group and pump described above in order to meet specific and incidental needs, all falling within the scope of protection defined in the following claims.

## Claims

1. Valve group (10) housable in extractable manner in a housing compartment (200) of a pump body (2) of a pump (1) of the cooling liquid of a vehicle cooling circuit, wherein the valve group (10) extends along a rotation axis (Y-Y) comprising a valve body (12), preferably cylindrical, inside which is identified transversally to said rotation axis (Y-Y) a through duct (14) for the cooling liquid,
wherein the valve body (12) comprises a plate (16) on the bottom, side walls (18), projecting axially from the plate (16), and a tubular head (20), which surmounts and joins the side walls (18) on the side opposite the plate (16) ;
wherein the valve group (10) comprises an obturator (30), configured to rotate around said rotation axis (Y-Y), wherein the obturator (30) comprises an active portion (31) configured to rotate in an offset manner in relation to said rotation axis (Y-Y) and suitable for obstructing and/or choking, in a closed position, the passage of liquid through the duct (14),
wherein said active portion (31) extends for a section of arc between a first ridge (311) and a second ridge (312) and is positioned distally from the entrance of the cooling liquid into the valve group (10); wherein the valve group (10) is **characterized by** the fact that the active portion (31) extends for a section of arc along an imaginary circumference (Cir) having an imaginary centre (C) offset from the rotation axis (Y-Y), so as, said first ridge (311) is farther from the rotation axis (Y-Y) than the second ridge (312).

2. Valve group (10) according to claim 1, wherein the active portion (31) is suitable to be housed in a valve body cavity (225), when the obturator (30) is placed in an open position.

3. Valve group (10) according to any of the previous claims, wherein the obturator (30) comprises a pointed end (32), opposite the active portion (31), that is to say positioned proximally from the entrance of the cooling liquid into the valve group (10), suitable to be the first portion of the obturator (31) to encounter the cooling liquid.

4. Valve group (10) according to claim 3, wherein the obturator (30) further comprises a sliding wall (35), which extends between the active portion (31) and the pointed end (32), and which comprises at least one concave portion (351) having a convex pattern, such that, with the obturator (30) in the closed position, the action of the cooling liquid on said sliding wall (35) is suitable to create an action on the obturator (30) in relation to the rotation axis (Y-Y), to bring it into an open position.

5. Valve group (10) according to claim 4, wherein said sliding wall (35), with the obturator in an open position, is suitable to channel the cooling liquid towards the exit of the valve group (10).

6. Valve group (10) according to any of the previous claims, wherein the duct (14) has at least one exit mouth (141) through which the cooling liquid exits from the valve group (10), wherein the active portion (31), with the obturator (30) in the closed position, at least partially closes said at least one exit mouth (141).

7. Valve group (10) according to any of the previous claims, wherein the duct (14) has a primary exit mouth (141') and a secondary exit mouth (141") through which the cooling liquid exits from the valve group (10), wherein the active portion (31), with the obturator (30) in the closed position, fully closes the primary exit mouth (141'), and at least partially closes the secondary exit mouth (141").

8. Valve group (10) according to claim 7, wherein the obturator (30) has a substantially wedge-shaped cross-section.

9. Valve group (10) according to claim 5 and any of the claims from 6 to 8, wherein said at least one exit mouth (141) is made in the valve body (12).

10. Valve group (10) according to any of the previous claims, wherein the active portion (31) comprises a gasket (310) suitable to improve the obstruction of the passage of cooling liquid, with the obturator (30) in the closed position.

11. Valve group (10) according to any of the previous claims, further comprising movement means, for moving the obturator (30), which comprise a shaft (40) connected to the obturator (30), a pin (44), eccentrically connected to the shaft (40), for example positioned on a disc (42), fixed on said shaft (40).

12. Pump (1) for a cooling circuit, in particular for vehicles, comprising:
- a pump body (2);
- and a rotor (4) to aspirate cooling liquid through an aspiration section and to send said cooling liquid under pressure to a delivery section, wherein a delivery chamber (6), placed downstream of the rotor (4), and at least one delivery duct (8) connected to the delivery chamber (6) are made in the pump body, suitable for being connected to the delivery section of the cooling circuit;
- a valve group (10) according to any of the previous claims,
wherein the housing compartment (200) of the pump body (2), containing said valve group (10), is positioned between said delivery chamber and at least one delivery duct (8).

13. Pump (1) according to claim 12, comprising actuation means suitable for acting on the obturator (30) of the valve group (10), to take it from the closed position to the open position, in which it permits the passage of cooling liquid, and vice versa.

14. Pump (1) according to claim 13, comprising a valve group according to claim 11, wherein the actuation means comprise a rod (46) translatable on command, for example by means of an actuator, connected to the pin (44) in a swivelling manner, so as to move said pin (44) along its eccentric trajectory.

15. Pump (1) according to any of the claims 13 and 14, comprising detector means suitable for detecting a functioning condition of the vehicle, for example heat detection means suitable for detecting the temperature of the cooling liquid or the temperature of the engine parts, operatively connected to the actuation means which, depending on what is detected by the detection means, move the obturator (30).

## Patentansprüche

1. Ventilbaugruppe (10), die in einer Gehäusekammer (200) eines Pumpenkörpers (2) einer Pumpe (1) der Kühlflüssigkeit eines Fahrzeugkühlkreises herausnehmbar aufgenommen werden kann, wobei die Ventilbaugruppe (10) sich entlang einer Drehachse (Y-Y) erstreckt und die einen vorzugsweise zylindrischen Ventilkörper (12), in dem ein Durchgangskanal (14) für die Kühlflüssigkeit quer zur Drehachse (Y-Y) ausgebildet ist, umfasst,
wobei der Ventilkörper (12) eine Platte (16) am Boden, Seitenwände (18), die axial von der Platte (16) vorstehen, und einen rohrförmigen Kopf (20), der die Seitenwände (18) an der von der Platte (16) abgewandten Seite, überbrückt und diese verbindet, umfasst;
wobei die Ventilbaugruppe (10) ein Absperrorgan (30) umfasst, das zum Drehen um die Drehachse (Y-Y) ausgebildet ist, wobei das Absperrorgan (30) einen aktiven Abschnitt (31) aufweist, der derart ausgebildet ist, dass er sich in einer versetzten Weise in Bezug auf die Drehachse (Y-Y) dreht und geeignet ist, in einer geschlossenen Position den Durchtritt der Flüssigkeit durch den Kanal (14) abzusperren oder zu drosseln,
wobei der aktive Abschnitt (31) sich über einen Bogenabschnitt zwischen einer ersten Kante (311) und einer zweiten Kante (312) erstreckt und von dem Einlass der Kühlflüssigkeit in die Ventilbaugruppe (10) entfernt angeordnet ist;
wobei die Ventilbaugruppe (10) **dadurch gekennzeichnet ist, dass** der aktive Abschnitt (31) sich über einen Bogenabschnitt entlang eines gedachten Umfangs (Cir), der einen gedachten Mittelpunkt (C) aufweist, der zu der Drehachse (Y-Y) versetzt ist, erstreckt, so dass die erste Kante (311) weiter von der Drehachse (Y-Y) entfernt angeordnet ist als die zweite Kante (312).

2. Ventilbaugruppe (10) gemäß Anspruch 1,
wobei der aktive Abschnitt (31) geeignet ist, in einem Ventilkörperhohlraum (225) aufgenommen zu werden, wenn das Absperrorgan (30) in einer offenen Position angeordnet ist.

3. Ventilbaugruppe (10) nach einem der vorangehenden Ansprüche,
wobei das Absperrorgan (30) ein spitzes Ende (32) aufweist, das vom aktiven Abschnitt (31) abgewandt ist, d. h. nahe dem Einlass der Kühlflüssigkeit in die Ventilbaugruppe (10) angeordnet ist, und geeignet ist, der erste Abschnitt des Absperrorgans (30) zu sein, der der Kühlflüssigkeit entgegensteht.

4. Ventilbaugruppe (10) gemäß Anspruch 3,
wobei das Absperrorgan (30) ferner eine Schiebewand (35) aufweist, die sich zwischen dem aktiven Abschnitt (31) und dem spitzen Ende (32) erstreckt, und die wenigstens einen konkaven Abschnitt (351) aufweist, der eine derart konvexe Form aufweist, dass, wenn das Absperrorgan (30) sich in der geschlossenen Position befindet, die Kraft der Kühlflüssigkeit auf die Schiebewand (35) geeignet ist, eine Kraft auf das Absperrorgan (30) in Bezug auf die Drehachse (Y-Y) zu erzeugen, um dieses in eine offene Position zu bringen.

5. Ventilbaugruppe (10) gemäß Anspruch 4,
wobei die Schiebewand (35) bei in einer offenen Position befindlichem Absperrorgan geeignet ist, die Kühlflüssigkeit zu dem Auslass der Ventilbaugruppe (10) zu leiten.

6. Ventilbaugruppe (10) nach einem der vorangehenden Ansprüche,
wobei der Kanal (14) wenigstens eine Auslassöffnung (141) aufweist, durch die die Kühlflüssigkeit aus der Ventilbaugruppe (10) austritt, wobei der aktive Abschnitt (31), bei sich in der geschlossenen Position befindlichem Absperrorgan, die wenigstens eine Auslassöffnung (141) teilweise verschließt.

7. Ventilbaugruppe (10) nach einem der vorangehenden Ansprüche,
wobei der Kanal (14) eine primäre Auslassöffnung (141') und eine sekundäre Auslassöffnung (141") aufweist, durch die Kühlflüssigkeit aus der Ventilbaugruppe (10) austritt, wobei der aktive Abschnitt (31), bei sich in der geschlossenen Position befindendem Absperrorgan (30), die primäre Auslassöffnung (141') vollständig verschließt und die sekundäre Auslassöffnung (141") wenigstens teilweise verschließt.

8. Ventilbaugruppe (10) gemäß Anspruch 7,
wobei das Absperrorgan (30) einen im Wesentlichen keilförmigen Querschnitt aufweist.

9. Ventilbaugruppe (10) gemäß Anspruch 5 und nach einem der vorangehenden Ansprüche 6 bis 8,
wobei die wenigstens eine Auslassöffnung (141) in dem Ventilkörper (12) ausgebildet ist.

10. Ventilbaugruppe (10) nach einem der vorangehenden Ansprüche,
wobei der aktive Abschnitt (31) eine Dichtung (310) aufweist, die geeignet ist, das Verschließen des Durchtretens der Kühlflüssigkeit, bei sich in der geschlossenen Position befindendem Absperrorgan (30), zu verbessern.

11. Ventilbaugruppe (10) nach einem der vorangehenden Ansprüche,
ferner umfassend Bewegungsmittel zum Bewegen des Absperrorgans (30), die eine Welle (40), die mit dem Absperrorgan (30) verbunden ist, einen Stift (44), der exzentrisch mit der Welle (40) verbunden ist, zum Beispeil auf einer Scheibe (42) angeordnet ist, die an der Welle (40) befestigt ist.

12. Pumpe (1) für einen Kühlkreis, insbesondere für Fahrzeuge, umfassend:
- einen Pumpenkörper (2);
- und einen Rotor (4), um Kühlflüssigkeit durch einen Ansaugabschnitt anzusaugen und die Kühlflüssigkeit unter Druck an einen Förderabschnitt zu leiten, wobei eine Förderkammer (6), die stromab vom Rotor (4) angeordnet ist, und wenigstens einen Förderkanal (8), der mit der Förderkammer (6) verbunden ist, in dem Pumpkörper ausgebildet ist, und geeignet sind, mit dem Förderabschnitt des Kühlkreises verbunden zu werden;
- eine Ventilbaugruppe (10) nach einem der vorangehenden Ansprüche,
wobei die Gehäusekammer (200) des Pumpenkörpers (2), die die Ventilbaugruppe (10) enthält, zwischen der Förderkammer und dem wenigstens einen Förderkanal (8) angeordnet ist.

13. Pumpe (1) gemäß Anspruch 12,
umfassend Betätigungsmittel, die geeignet sind, auf das Absperrorgan (30) der Ventilbaugruppe (10) zu wirken, um dieses aus der geschlossenen Position zu der offenen Position zu bewegen, in der es den Durchtritt der Kühlflüssigkeit erlaubt und umgekehrt.

14. Pumpe (1) gemäß Anspruch 13,
umfassend eine Ventilbaugruppe gemäß Anspruch 11, wobei die Betätigungsmittel eine Stange (46) umfasst, die auf Befehl, beispielsweise durch einen Aktuator, der mit dem Stift (44) in einer drehbaren Weise verbunden ist, bewegbar ist, um den Stift (44) entlang seiner exzentrischen Bahn zu bewegen.

15. Pumpe (1) nach einem der vorangehenden Ansprüche 13 und 14,
umfassend Detektormittel, die geeignet sind, einen Funktionszustand des Fahrzeugs festzustellen, beispielsweise Wärmebestimmungsmittel, die geeignet sind, die Temperatur der Kühlflüssigkeit oder die Temperatur der Motorteile, die mit den Betätigungsmitteln wirkmäßig verbunden sind, zu bestimmen, und abhängig von dem, was durch die Detektormittel festgestellt wurde, das Absperrorgan (30) zu bewegen.

## Revendications

1. Groupe de vanne (10) pouvant être logé de manière extractible dans un compartiment de carter (200) d'un corps de pompe (2) d'une pompe (1) du liquide de refroidissement d'un circuit de refroidissement de véhicule, dans lequel le groupe de vanne (10) s'étend le long d'un axe de rotation (Y-Y) comprenant un corps de vanne (12), de préférence cylindrique, à' l'intérieur duquel est identifié transversalement audit axe de rotation (Y-Y) un conduit traversant (14) pour le liquide de refroidissement,
dans lequel le corps de vanne (12) comprend une plaque (16) sur le fond, des parois latérales (18), se projetant axialement depuis la plaque (16), et une tête tubulaire (20), qui surmonte et joint les parois latérales (18) sur le côté opposé à la plaque (16) ;
dans lequel le groupe de vanne (10) comprend un obturateur (30), configuré pour tourner autour dudit axe de rotation (Y-Y), dans lequel l'obturateur (30) comprend une portion active (31) configurée pour tourner d'une manière décalée par rapport audit axe de rotation (Y-Y) et appropriée pour obstruer et/ou étrangler, dans une position fermée, le passage de liquide à travers le conduit (14),
dans lequel ladite portion active (31) s'étend pour une section d'arc entre une première arête (311) et une seconde arête (312) et est positionnée distalement depuis l'entrée du liquide de refroidissement dans le groupe de vanne (10) ;
dans lequel le groupe de vanne (10) est **caractérisé par le fait que** la portion active (31) s'étend pour une section d'arc le long d'une circonférence imaginaire (Cir) ayant un centre imaginaire (C) décalé de l'axe de rotation (Y-Y), de sorte que ladite première arête (311) est plus éloignée de l'axe de rotation (Y-Y) que la seconde arête (312).

2. Groupe de vanne (10) selon la revendication 1, dans lequel la portion active (31) est appropriée pour être logée dans une cavité de corps de vanne (225), quand l'obturateur (30) est placé dans une position ouverte.

3. Groupe de vanne (10) selon l'une quelconque des revendications précédentes, dans lequel l'obturateur (30) comprend une extrémité pointue (32), opposée à la portion active (31), c'est-à-dire positionnée de manière proximale à l'entrée du liquide de refroidissement dans le groupe de vanne (10), appropriée pour être la première portion de l'obturateur (31) à rencontrer le liquide de refroidissement.

4. Groupe de vanne (10) selon la revendication 3, dans lequel l'obturateur (30) comprend en outre une paroi de coulissement (35), qui s'étend entre la portion active (31) et l'extrémité pointue (32), et qui comprend au moins une portion concave (351) ayant un profil convexe, de telle sorte que, avec l'obturateur (30) dans la position fermée, l'action du liquide de refroidissement sur ladite paroi de coulissement (35) est appropriée pour créer une action sur l'obturateur (30) par rapport à l'axe de rotation (Y-Y), pour l'amener dans une position ouverte.

5. Groupe de vanne (10) selon la revendication 4, dans lequel ladite paroi de coulissement (35), avec l'obturateur dans une position ouverte, est appropriée pour canaliser le liquide de refroidissement vers la sortie du groupe de vanne (10).

6. Groupe de vanne (10) selon l'une quelconque des revendications précédentes, dans lequel le conduit (14) comporte au moins une embouchure de sortie (141) à travers laquelle le liquide de refroidissement sort du groupe de vanne (10), dans lequel la portion active (31), avec l'obturateur (30) dans la position fermée, ferme au moins partiellement ladite au moins une embouchure de sortie (141).

7. Groupe de vanne (10) selon l'une quelconque des revendications précédentes, dans lequel le conduit (14) comporte une embouchure de sortie primaire (141') et une embouchure de sortie secondaire (141") par lesquelles le liquide de refroidissement sort du groupe de vanne (10), dans lequel la portion active (31), avec l'obturateur (30) dans la position fermée, ferme totalement l'embouchure de sortie primaire (141'), et ferme au moins partiellement l'embouchure de sortie secondaire (141").

8. Groupe de vanne (10) selon la revendication 7, dans lequel l'obturateur (30) présente une section transversale sensiblement cunéiforme.

9. Groupe de vanne (10) selon la revendication 5 et l'une quelconque des revendications 6 à 8, dans lequel ladite au moins une embouchure de sortie (141) est créée dans le corps de vanne (12).

10. Groupe de vanne (10) selon l'une quelconque des revendications précédentes, dans lequel la portion active (31) comprend un joint (310) approprié pour améliorer l'obstruction du passage de liquide de refroidissement, avec l'obturateur (30) dans la position fermée.

11. Groupe de vanne (10) selon l'une quelconque des revendications précédentes, comprenant en outre un moyen de déplacement, pour déplacer l'obturateur (30), qui comprend un arbre (40) connecté à l'obturateur (30), une broche (44), connectée de manière excentrée à l'arbre (40), par exemple positionnée sur un disque (42), fixé sur ledit arbre (40).

12. Pompe (1) pour un circuit de refroidissement, en particulier pour véhicules, comprenant :
- un corps de pompe (2) ;
- et un rotor (4) pour aspirer le liquide de refroidissement à travers une section d'aspiration et pour envoyer ledit liquide de refroidissement sous pression jusqu'à une section de distribution, dans laquelle une chambre de distribution (6), placée en aval du rotor (4), et au moins un conduit de distribution (8) connecté à la chambre de distribution (6) sont créés dans le corps de pompe, approprié pour être connecté à la section de distribution du circuit de refroidissement ;
- un groupe de vanne (10) selon l'une quelconque des revendications précédentes,
dans laquelle le compartiment de carter (200) du corps de pompe (2), contenant ledit groupe de vanne (10), est positionné entre ladite chambre de distribution et au moins un conduit de distribution (8).

13. Pompe (1) selon la revendication 12, comprenant un moyen d'actionnement pour agir sur l'obturateur (30) du groupe de vanne (10), pour le faire passer de la position fermée à la position ouverte, dans laquelle il permet le passage de liquide de refroidissement, et vice versa.

14. Pompe (1) selon la revendication 13, comprenant un groupe de vanne selon la revendication 11, dans laquelle le moyen d'actionnement comprend une tige (46) pouvant être déplacée sur commande, par exemple au moyen d'un actionneur, connecté à la broche (44) d'une manière pivotante, de manière à déplacer ladite broche (44) le long de sa trajectoire excentrique.

15. Pompe (1) selon l'une quelconque des revendications 13 et 14, comprenant un moyen de détecteur approprié pour détecter une condition de fonctionnement du véhicule, par exemple un moyen de détection de chaleur approprié pour détecter la température du liquide de refroidissement ou la température des pièces de moteur, fonctionnellement connectées au moyen d'actionnement qui, en fonction de ce qui est détecté par le moyen de détection, déplace l'obturateur (30).
